Europäisches Patentamt

(19) European Patent Office

Office européen des brevets

(11) Publication number: **0 032 193**

**B1**

(12) **EUROPEAN PATENT SPECIFICATION**

(45) Date of publication of patent specification: **19.10.83**

(51) Int. Cl.³: **G 07 C 11/00, H 04 L 9/02**

(21) Application number: **80107614.2**

(22) Date of filing: **04.12.80**

(54) Communication apparatus.

(30) Priority: **28.12.79 US 108071**

(43) Date of publication of application:
**22.07.81 Bulletin 81/29**

(45) Publication of the grant of the patent:
**19.10.83 Bulletin 83/42**

(84) Designated Contracting States:
**BE CH DE FR GB IT LI NL SE**

(56) References cited:
**FR - A - 2 394 131**
**FR - A - 2 417 141**
**GB - A - 1 576 463**
**GB - A - 2 011 671**
**US - A - 4 138 057**

(73) Proprietor: **International Business Machines Corporation**
**Old Orchard Road**
**Armonk, N.Y. 10504 (US)**

(72) Inventor: **Bouricius, Willard Gail**
**109 Mustato Road**
**Katonah New York 10536 (US)**
Inventor: **Stuckert, Paul Edward**
**61 Mustato Road**
**Katonah New York 10536 (US)**

(74) Representative: **Lancaster, James Donald**
**IBM United Kingdom Patent Operations Hursley Park ·**
**Winchester Hants SO21 2JN (GB)**

Courier Press, Leamington Spa, England

Communication apparatus

Modern business practices in several sectors of our economy have made unnecessary the physical handling of actual cash with its inherent dangers of theft and loss. Such sectors include banking, large retail stores, and a great variety of other businesses where articles are charged to an account, the purchaser billed, and the bills subsequently paid by checks. In such transactions the details are often recorded in computer data banks in which customer accounts are maintained and where the necessary debiting and crediting is done on a real-time basis. The next logical extension to such automated electronic record keeping systems employing computers, credit cards and the like, is Electronic Funds Transfer Systems, specifically the direct transfer of funds from, for example, a Person's account to a Retailer's account upon the purchase of an item in a retail establishment. Such systems greatly reduce the paper work required of both the customers and the retail establishment.

In order for an Electronic Funds Transfer system to be acceptable, it should operate so that the Host system (typically a bank, a savings and loan institution, or a network of similar entities) which performs the funds transfer is certain that both the Person seeking to make a purchase and the Retailer (or other selling business entity) have agreed on the details of a particular purchase. Further, the system procedures must be so structured that neither of the involved parties can repudiate the final funds transfer. Secure information transmissions must be provided between the Retailer and the Host system, whereby an eavesdropper on a communication link would not be able to obtain any information. Also, sufficient information must be transmitted to the Host system to allow it to prepare periodic statements to be sent to the Person and the Retailer. Various other features or attributes may also be included in such a system as will be apparent from the subsequent description.

Although broad concepts of Electronic Funds Transfer systems may be clear, the system proposals so far have not been considered satisfactory. However, the recent development of secure and economical cryptographic methods for both communication and storage of (binary) data makes the unauthorized decryption and use of that data impossible as long as the encryption keys are not compromised. In the United State, to establish a standard for government and industry use, the National Bureau of Standards has recently recommended a particular encryption algorithm. This recommendation is contained in the publication, "Data Encryption Standard", Federal Information Processing Standard (FIPS), Publication 46, National Bureau of Standards, U.S. Department of Commerce, January 1977. It describes a key-controlled block-cipher system. Such systems require the use of an encryption key consisting of a predetermined number of bits (e.g. 56) which key is employed for both the encryption and the decryption process and hence must be known to both the sender and receiver of enciphered transmissions. Any eavesdroppers will presumably not know the keys and will therefore not be able to decrypt the transmissions.

For a description of the operation of a typical block-cipher cryptographic system, reference is made to our following patents: U.S. Patent No. 3,798,359 entitled, "Block-Cipher Cryptographic System", U.S. Patent No. 3,796,830, entitled, "Recirculating Bock-Cipher Cryptographic System"; and U.S. Patent No. 3,958,081, entitled, "Block-Cipher System for Data Security". These patents generally describe the concepts involved with sophisticated, Key-Controlled Block-Cipher Cryptographic Systems currently known in the art. The later U.S. Patent No. 3,958,081 relates to a specific implementation of such a Block-Cipher Cryptographic System and much more particularly, a Cryptographic System which conforms to the previously specified Federal Information Processing Standard currently in effect in the procurement regulations of the United States Government.

For a description of a personal portable transaction terminal device (XATR) adaptable for use in apparatus according to the invention which interfaces with a retailer's point of sale terminal (POST) on the one hand and with the Person's data storage and transfer card (DSTC) on the other, reference is made to patent specification GB—A—2,011,671. This describes an XATR with its own keyboard and a display on which data can be selectively displayed.

For a description of a data storage and transfer card (DSTC) adaptable for use in apparatus according to the invention, and operated with a personal portable terminal device (XATR) and a Retailer's terminal, reference is made to our European patent application 80106085.6, publication No. EP—A—29 894. In that patent application a DSTC is disclosed which can store a person's secret encryption key $K_p$ and which incorporates a key-controlled block-cipher encryption device for encrypting a random word from a random word generator. There is further disclosed the use of the XATR provided with a keyboard for the entry by the person of his memorised key. This patent application describes what is included in the pre-characterising part of claim 1. It is not however concerned with the manner of transmission of messages, but with verifying the identity of the person using the XATR and DSTC.

Another similar identification system is disclosed in U.S. Patent No. 3,806,874 (see e.g. Fig. 7).

The present invention provides a communication apparatus comprising a terminal (POST) having a first encryption unit (28) with a first key (K_R), a subassembly (XATR, DSTC) having a second encryption unit (11) with a second key (K_p), means (XATR/POST Interface) for selectively coupling said terminal and said subassembly for data exchange, at least one of said terminal and sub-assembly having data-entry means (24, 14), characterised by switch means (S1 to S8) selectively operable to establish data paths in and between the terminal and said subassembly whereby a transmission message can be formed from message data, at least some variable data of which is entered at said data-entry means, at the terminal output including

a) a first code number (Retailer's Business Number) and a second code number (Person's Card Number) respectively identifying the first key (K_R) and the second key (K_p), at least one of said code numbers being uncrypted by either the first or second keys

b) data (TM1) of a transaction encrypted under the key corresponding to said at least one uncrypted code number

c) data (TM2) of said transaction doubly encrypted under the first and second keys, the encrypting under the key corresponding to said at least one uncrypted code number being last,

without the first and second keys, as such, being accessible respectively by said subassembly from the terminal, and by said terminal from the sub-assembly.

The first and second code numbers in the transmission message can both be uncrypted, but preferably the first code number is uncrypted, and the second code number is encrypted under the first key (K_R).

The particular embodiment described hereinafter forms part of an Electronic Funds Transfer system and has several advantageous features. The Host which performs the electronic funds transfer may be assured that the Person presenting himself for a particular purchase, and the Retailer, both agree on the terms of the transaction. The Host is protected from the possibility of the Person and Retailer later disagreeing about some factual details of the transaction and one or the other seeking to repudiate the transaction. All three parties to the system, may be certain that no one is capable of intercepting and decoding the messages. Further, the Person may be assured that the Retailer cannot gain access to his personal data.

In the Drawings

FIG. 1 is a block diagram of an Electronic Funds Transfer system according to the invention;

FIGS. 2, 3 and 4 are more detailed block diagrams illustrating structure and operation of part of the system of FIG. 1; and

FIGS. 5A, 5B and 5C illustrate the data content of a transmission message, and steps in its decryption.

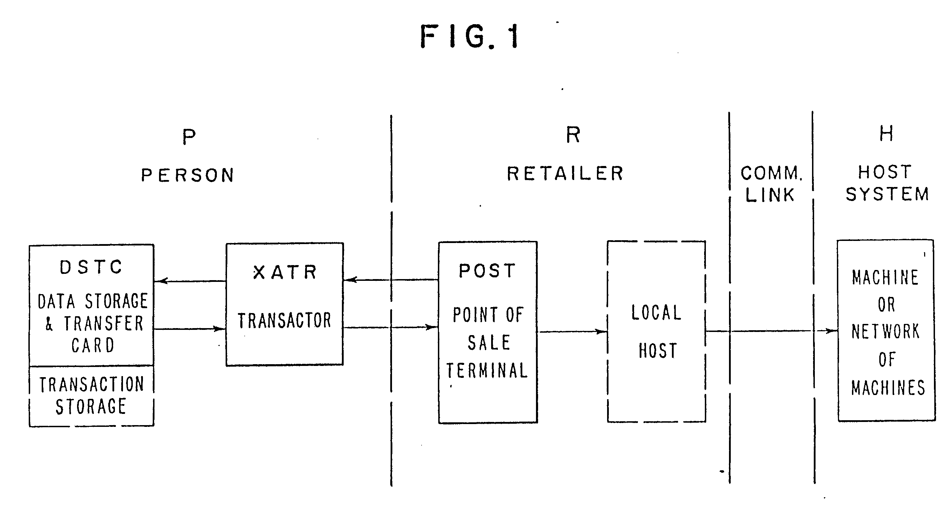

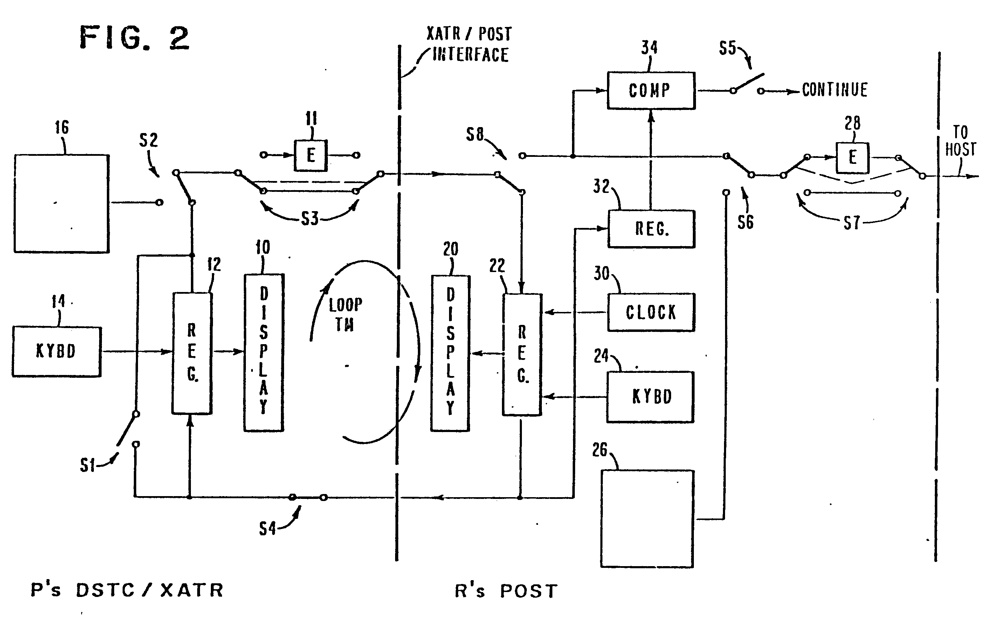

Referring now to FIG. 1, the block diagram of an EFT system shows four entities, the Person (P), the Retailer (R), the Host system (H), and a communication link (COMM. LINK) for interconnecting the retailer's point of sale terminal with the Host system. Vertical dashed lines represent interfaces between the entities, the most significant one being that between P and R. R has a POST which is connected to an XATR device of P by any suitable means such as those described in the previously referenced GB—A—2,011,671. P also has a DSTC shown in data transfer relationship with the XATR. For purposes of this description (e.g. see Fig. 2) P's DSTC and XATR may be considered as one functional unit. Fig. 1 shows a possible modification in which a local Host is provided in the Retailer's establishment. This will be mentioned again hereinafter.

Referring now to FIGS. 2, 3 and 4, the functional unit and data flow are illustrated for the three different operating modes which occur during the formation of a transmission message which is sent from R to H. It will be noted that all three figures show identical hardware components, the difference being in the different switch settings of switches S1—S8 which establish different data flow paths in P's and R's equipment during the formation of various portions of the message.

Considering Fig. 2 first, the DSTC/XATR combination has in the XATR a number of switches S1, S2, S3 and S4, a display 10, a keyboard 14, a key-controlled block-cipher encryption unit 11 which is supplied with P's unique encryption key K_p from a "secret" store (not shown) on the DSTC, a register (not shown) for storing P's DSTC number, and a register 16 for storing certain "Person's Data" for example the make and model of the XATR and DSTC.

The DSTC includes a register unit 12, part of which may comprise transaction storage (see Fig. 1) which will be mentioned later.

The POST has a number of switches S5, S6, S7 and S8, and also includes a register unit 22 with inputs from a keyboard 24 and a clock 30, and with an output to a display 20. A register 32 is connected to the register unit 22, and is coupled to a comparator 34. Also included are a key-controlled block-cipher encryption unit 28 in which is stored R's unique encryption key K_R, and there is a register 26 for storing certain "Retailer's Data" for example the make and model of the POST.

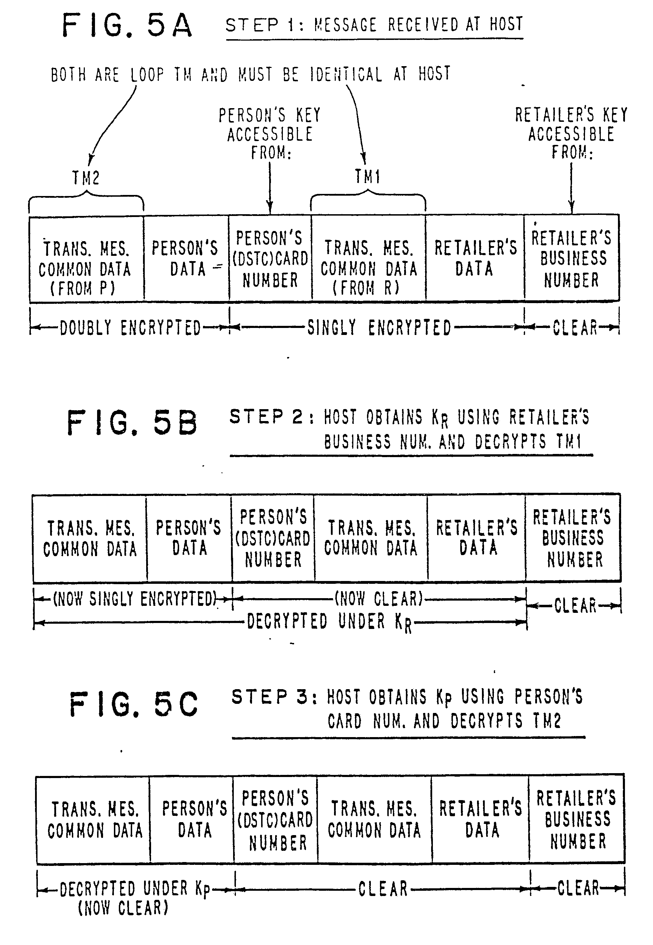

Assume now that P and R have reached a purchase agreement relative to some item of merchandise. P connects his XATR, with his personal DSTC mounted therein, to R's point of sale terminal (POST). In the first mode (LOOP TM mode) of operation illustrated in Fig. 2, P's and R's equipment form a loop as a result of keyboard entries by P or R or by both which set in particular switches S2, S3, S8 and S4 as shown. In this mode P's DSTC number is inserted into the message stream by means of P's XATR/DSTC, by reading it from the appropriate register (not shown) in the DSTC, and R's POST automatically inserts the date, time, R's business number, and optionally R's account type and R's account pointer. The amount, debit person, credit person, a post date if any, and optionally a merchandise description and P's account type are also entered by keyboard, and the amount, debit and credit persons, and post date are shown on P's and R's displays. The expression "post date" will be explained in connection with Table 1 hereinafter. Also by means of the keyboard 14 on his XATR, P may specify an account pointer which would then be placed in the "P's Data" portion for P of the Transmission Message (see Table 1 and Fig. 5A). At this point, the Loop TM mode is complete and P and R both inspect their displays for concurrence of the limited displayed data. So far no encryption has occurred.

If the displays are agreed to as defining the basic components of the transaction satisfactorily, P and R each depress "execute" buttons (not shown) on their equipment, causing the following sequential actions to occur. P's XATR stores in register 12 located in P's DSTC, the data consisting of the date, time, amount, debit person, credit person, post date (if any), and the optional data (merchandise description, and P's and R's account types). R's POST stores the same data in register 22. This data so stored is the "common data" that must match, first before any transmission to H, and secondly within H following encryption/decryption (to be described) to initiate a funds transfer.

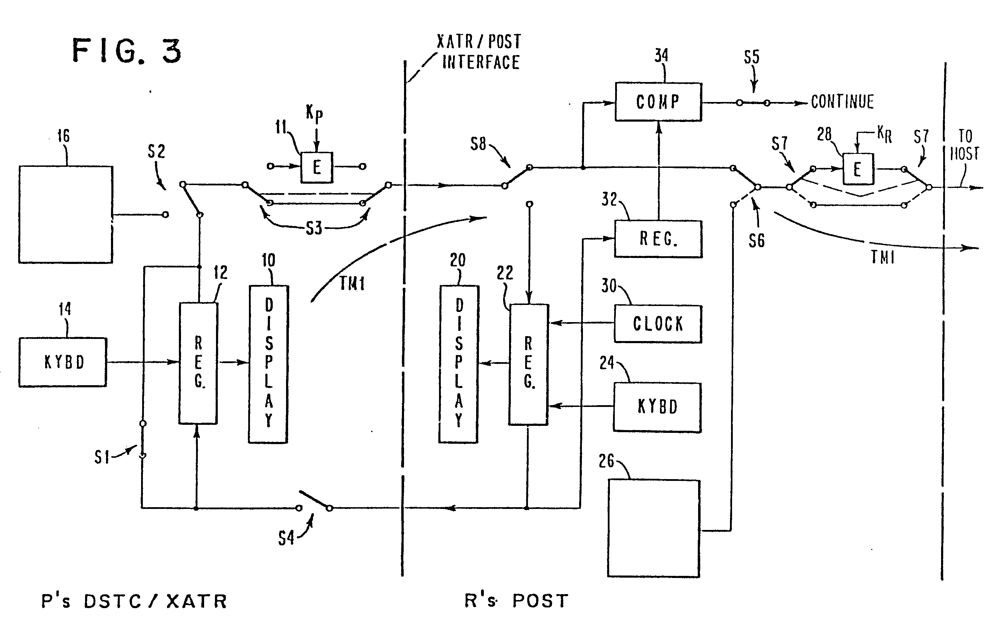

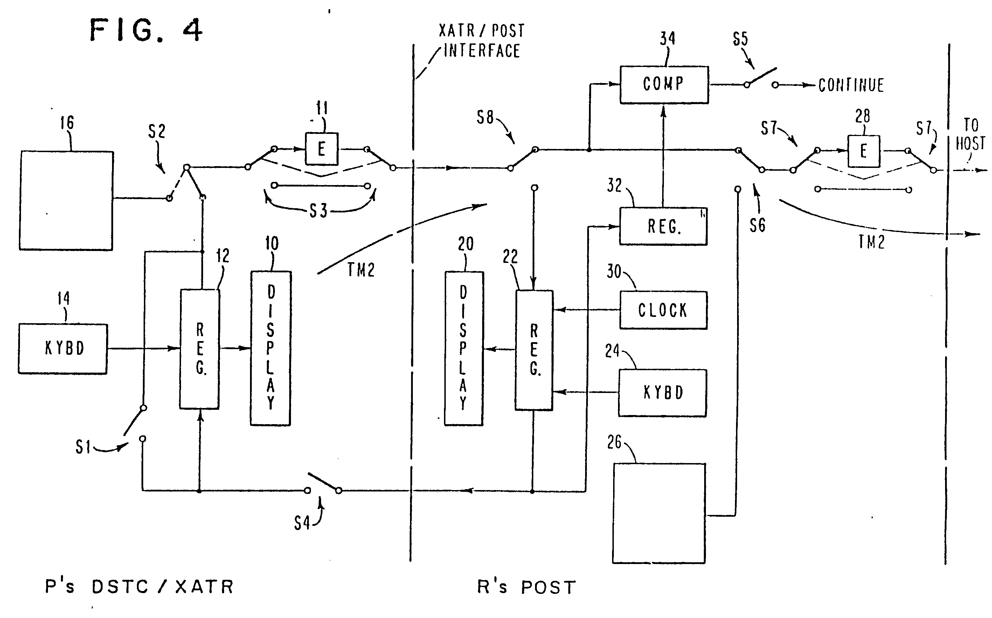

Next the switches S1, S4, and S5 reconfigure the circuitry of the XATR and the POST as shown in Fig. 3. P then transmits his copy of all this "common data" to R and switch S8 routes it to the comparator 34 for a bit by bit automatic electronic comparison and validation with the corresponding data transferred from register 22 to register 32. If P's data compares with that already stored in the POST, a "CONTINUE" signal is generated by the comparator 34, which signifies that switch S7 should be set to the dash line position, and switch S4 should be opened, whereon P's XATR/DSTC transmits R's business number to the Host in clear. Switch S7 is then reset to the full line position, switch S6 is set to the dash line position, and register 26 is operated to transfer Retailer's Data to encryption unit 28 where it is encrypted by key $K_R$ and transmitted to the Host. Then switch S6 is set to the full line position, and the "common data" is sent from P's XATR/DSTC) via S2, S3, S8, S6, S7 and likewise encrypted by key $K_R$ and transmitted to the Host. Following this, P transmits his DSTC number by the same route via encryption unit 28, and then switch S3 is set to the position shown in Fig. 4, and switch S2 is set to the dash line position, and register 16 is operated to transfer Person's Data via both encryption units 11, 28. Then switch S2 is reset to the solid line position of Fig. 4, and the "common data" is sent from P's XATR/DSTC via both encryption units 11, 28. Fig. 5A shows the format of all this data as it is received by H.

The switches S1 to S8 are actually high speed electronic switches which, together with the rest of the system, are under the control of one or two microprocessors (not shown) located in the POST and/or in the XATR. The microprocessor control is conventional. Table 1 follows which gives the components of the transmission message. The five components are the first five from right to left shown in Fig. 5A, the sixth left hand component in Fig. 5A being the same as the third component (COMMON DATA).

### TABLE 1
#### Transmission Message Components

| | | |
|---|---|---|
| 1. Retailer's Business Number | | |
| 2. Retailer's Data | Account Pointer (optional)<br>Terminal Make and Model<br>Terminal Storage Make and Model<br>Security Information | |
| 3. Common Data TM1 and TM2 | Date<br>Time<br>Amount<br>Debit Person<br>Credit Person<br>Post Date (if any)<br>Merchandise Description (optional)<br>Person's Account Type (optional)<br>Retailer's Account Type (optional) | |
| 4. Person's Card Number | | |
| 5. Person's Data | Account Pointer (optional)<br>Transactor Make and Model<br>Card Make and Model | |

As indicated in Table 1, each of TM1 and TM2 contains

a) the date of the transaction and the time to the nearest second so that every transmission message will be unique even though it could be the same in all other respects. This prevents the multiple use of the same message.

b) The specific amount of money involved in the transaction.

c) A specification as to whose account (P's or R's) shall be debited and whose credited.

d) A post date, if desired. In the course of the transaction P and R may, by mutual consent, agree on a post date, or it may be agreed upon in advance, e.g., the last day of any month.

e) The type of account (e.g., credit, charge, bank, debit, etc.) may be specified by P and R. This, of course, presumes that the system includes different account types. Normally, the account type designation will imply a particular H. Both P and R would have accounts with a particular H in order for the fund transfer to be effected, but alternatively, Hosts with clearing house functions could be involved.

As regards Person's Data, and Retailer's Data, this type of information might include identity information such as the type DSTC (assuming different models might exist), the type of XATR used by P, and the type of Point of Sale Terminal (POST), storage, and other equipment used by R.

Additional items could be included under Person's Data and Retailer's Data such as account balances, and whether or not the item was a sale item. However, such additional information should be properly tailored to the needs of the particular P, R and H and, as such, does not characterise the present invention.

As indicated in Fig. 5A, the transmission message format is a catenation of clear, singly encrypted, and doubly encrypted portions. From right to left in the figure, it will be noticed that R's business number is clear and it is with this portion of the message that H is able to look up and access R's encryption key $K_R$ from H's own store of keys, with which the remainder of the transmission message is decrypted. This first decryption (see Fig. 5B) gives the person's DSTC card number, the common data (TM1) and the Retailer's Data.

P's DSTC number is then used by H to access $K_p$ which is used by H in a second decryption, indicated in Fig. 5C, to give Person's Data and the common data TM2. At this point, H examines TM1 and TM2 and automatically electronically compares them for identity.

H comprises a computer (not shown) and the various functions required of H may be readily implemented by known programming techniques or dedicated hardware. Having obtained R's Business Number and P's DSTC number, and R's and P's account types, H can by table look-up determine the specific numbers of the particular R and P accounts to be used in complying with the transmission message. If TM1 and TM2 are identical, the Host performs whatever operation or transaction has been specified e.g. transferring funds between accounts as indicated. If there is a non-compare, both parties involved are notified by H so that they may initiate a retry or take some other corrective measures. Thus, H is assumed to have the necessary accounting program routines for debiting a specific account of P and crediting the specific account of R. Conversely, an account of P can be credited, and an account of R can be debited in the case of a "credit" transaction between P and R.

H is also assumed to have the ability to store properly authenticated transmission messages for funds transfer operations on a future date specified by a post date in the transmission message.

It might occur that P and R operate their equipment so that the identical transmission message, specifying the same date and time is sent to H twice. To prevent double compliance with the message, the Host computer checks each transmission message for identity with previous messages, and rejects the redundant later message if identity is found, notifying the parties concerned.

The operation of the system can be modified if, as indicated in Fig. 1, R has a LOCAL Host. A local Host gathers transmission messages prepared by POSTs within a given retail establishment or group of establishments. These transmission messages are temporarily stored and subsequently sent to the overall system Host in a batch processing operation. The disadvantages of this mode of operation include the fact that accounts are not always up to date, and the possibility that a mistake (or attempted fraud) on the part of either P or R would not be detected until some time after an actual purchase.

As will be understood, once anything is encrypted under P's key, the information content cannot be altered by R prior to transmittal to H. Without knowledge of P's key, R cannot either decrypt P's message or form a message which is acceptable to H. With the protection afforded by the system, R may store many transmission messages, involving many different customers, for subsequent batch transmission to H without any compromise to the security of the individual customers.

Any key-controlled block-cipher cryptographic communication system assumes the absolute security of the individual encipherment keys. There is no way to derive the keys, even knowing a plethora or clear texts and their paired encryptions. An eavesdropper would have to obtain both keys from P, R, or H by some method in order to initiate a fraudulent EFT by H.

It will be appreciated that many modifications can be made to the system described without departing from the scope of the invention as defined in the appended claims. For example, the transmission message may omit Retailer's Data and Person's Data if H can determine this data from its own storage using P's DSTC number and R's business number as addresses.

Also the manner and order in which a transmission message is formed can be changed.

For example P and R can first agree on the contents of a TM (COMMON DATA) which is to be sent to H where an EFT is to be effected. Next P sends the TM to R whose terminal can automatically compare the received TM with R's TM to assure detailed bit by bit agreement. Then P, employing encryption key $K_p$ encrypts

both the TM and Person's Data and communicates them to R, together with, unencrypted, the Person's card number. To all this R catenates his own TM, and Retailer's Data, and employing encryption key $K_R$, encrypts these and the data from P to form the singly and doubly encrypted portions of the transmission message that is sent to H, R including his own Retailer's Business Number in clear at the beginning of the message. Actually the order of the components of a transmission message can be varied e.g. the doubly encrypted part may precede the singly encrypted part.

Some of the data stored in the registers of the DSTC/XATR e.g. 16 and 26 may be either deleted or expanded, depending upon the particular installation, and the fineness of control desired. In particular a register need not be used in the DSTC for permanently storing P's DSTC number as this number could be entered by keyboard 14. Actually one of the keyboards (14, 24) could be omitted.

Also, additional transaction storage can be provided in P's DSTC as mentioned previously (and illustrated in Fig. 1) so that each transmission message entered into by P is temporarily stored. This data is later read out and printed or displayed at an appropriate terminal at a time chosen by P e.g. for checking his account statement from H.

Also the system can be modified to include a verification system to enable the identity of each Person attempting to use the system to be verified.

The system described in detail has particular applicability to the retail sales and banking fields wherein point of sale terminals located in retail establishments are connected over low security public communication links to a central Host computer located, for example, in a bank where an electronic funds transfer operation is to take place.

The system renders practical the concept of electronic funds transfer utilizing currently available equipment. It allows the parties to such a funds transfer operation to have a high degree of confidence in the integrity of the system.

The use of the key-controlled block-cipher cryptographic systems currently available assures all three parties, P, R and H, that there is substantially no risk of the unauthorized interception and fraudulent use of any data contained in the transaction messages passing over public communication links. Furthermore, transmission errors are always detected because in such events the decryptions are garbled.

The Host, due to the protocol of the system is assured that if the common message data TM1 and TM2 in the messages are the same, he may proceed with the electronic funds transfer operation. He is further assured that neither of the parties P or R will be able to later repudiate the transaction, since it would be virtually impossible to forge either TM1 or TM2 without knowledge of the requisite encryption keys which would assumedly not be available to a fraudulent party.

R may have ultimate faith in the reliability of the system since the message TM1 is singly encrypted under his own key $K_R$ and that key is not available to P for any possible alteration i.e. it is not accessible by the DSTC/XATR from the POST.

Similarly, P is assured that there is no possibility of R's altering P's message TM2 which is transmitted to R in encrypted form since there is assumedly no way that R could have possession of P's encryption key $K_p$. This is because key $K_p$ never passes into the possession of R at any time, the key $K_p$ not being accessible by the POST from the DSTC/XATR.

While the system is believed to have primary applicability in the retail merchandise field as described hereinabove, it can be adapted to different business situations. For example, such a system could be installed in a stock brokerage office where it was desired to purchase stock via some sort of identification card such as a DSTC in the possession of the person. In this case, the retailer would be the stockbroker, who would communicate the transaction to a common banking institution where both P and the stockbroker had accounts. A further application might be in the banking industry where the retailer would be replaced by either a cash issuing terminal, or a remote teller location in a large bank system.

It will be noted that the description of the system does not include mention of any additional security measures which would in all probability be utilized in many installations, for example, the use in the communication link between R and the Host of a further encryption using a transmission key $K_T$, and a related decryption. These measures would be add-on features to the system herein disclosed and do not directly relate to the present invention.

**Claims**

1. Communication apparatus comprising a terminal (POST) having a first encryption unit (28) with a first key ($K_R$), a sub-assembly (XATR, DSTC) having a second encryption unit (11) with a second key ($K_p$), means (XATR/POST Interface) for selectively coupling said terminal and said sub-assembly for data exchange, at least one of said terminal and sub-assembly having data-entry means (24, 14), characterised by switch means (S1 to S8) selectively operable to establish data paths in and between the terminal and said sub-assembly whereby a transmission message can be formed from message data, at least some variable data of which is entered at said data-entry means, at the terminal output including

a) a first code number (Retailer's Business Number) and a second code number (Person's Card Number) respectively identifying the first key ($K_R$) and the second key ($K_p$), at least one of said code numbers being uncrypted by either the first or second keys

b) data (TM1) of a transaction encrypted under the key corresponding to said at least one uncrypted code number

c) data (TM2) of said transaction doubly encrypted under the first and second keys, the encrypting under the key corresponding to said at least one uncrypted code number being last,

without the first and second keys, as such, being accessible respectively by said sub-assembly from the terminal, and by said terminal from the sub-assembly.

2. Communication apparatus as claimed in claim 1 in which said at least one of said code numbers is said first code number (Retailer's Business Number), the second code number (Person's Card Number), in the transmission message, being encrypted under the first key (K$_R$).

3. Communication apparatus as claimed in claim 1 or 2 including a host receiver coupled for data exchange with said terminal output, said host receiver having its own store of keys including the first and second keys, each key being accessible using the respective code number (Retailer's Business Number or Person's Card Number) for that key.

4. Communication apparatus as claimed in claim 3 in which said host receiver includes means for automatically comparing, after decrypting the transmission message, the data (TM1 and TM2) of the transaction for identity, and for acting in accordance with the transmission message when said identity is found.

5. Communication apparatus as claimed in claim 4 which forms an electronic funds transfer system, the host transferring funds between accounts indicated from the transmission message when said identity is found.

6. Communication apparatus as claimed in any preceding claim in which the transmission message includes time of day data.

7. Communication apparatus as claimed in any preceding claim in which said data-entry means includes a keyboard (24) in the terminal and a keyboard (14) in the sub-assembly.

8. Communication apparatus as claimed in any preceding claim in which the terminal includes a display (20), and the sub-assembly includes a display (10), both displays being operable to display data (TM1 or TM2) of a transaction.

9. Communication apparatus as claimed in any preceding claim in which said first and second encryption units (28, 11) are block-cipher encryption units.

10. Communication apparatus as claimed in any preceding claim in which said sub-assembly includes a data storage and transfer card (DSTC) containing storage means storing at least part of said second key (K$_p$).

**Patentansprüche**

1. Datenübertragungseinrichtung mit einem Terminal (POST) mit einer ersten Verschlüsselungseinrichtung (28) mit einem ersten Schlüssel (K$_R$), einer Untereinheit (XATR, DSTC) mit einer zweiten Verschlüsselungseinrichtung (11) mit einem zweiten Schlüssel (K$_p$), mit Mitteln (XATR/POST Schnittstelle) zur selektiven Verbindung des Terminals mit der Untereinheit zum Datenaustausch, wobei mindestens das Terminal oder die Untereinheit Dateneingabemittel (24, 14) aufweisen, gekennzeichnet durch selektiv betätigbare Schaltmittel (S1 bis S8) zum Errichten von Datenpfaden innerhalb des Terminals und zwischen dem Terminal und der Untereinheit, wobei die Übertragungsnachricht beim Terminal geformt werden kann aus Nachrichtendaten, von denen zumindest einige variable Daten durch die Dateneingabemittel eingegeben werden, enthaltend

a) eine erste Codezahl (Geschäftsnummer des Händlers) und eine zweite Codezahl (Persönliche Kartennummer), welche jeweils den ersten Schlüssel (K$_R$) und den zweiten Schlüssel (K$_p$) identifizieren, wobei zumindest eine der beiden Codezahlen unverschlüsselt durch den ersten oder zweiten Schlüssel gelassen wird,

b) Daten (TM1) einer Transaktion, welche mit dem zu der unverschlüsselten Codezahl gehörenden Schlüssel verschlüsselt werden,

c) Daten (TM2) dieser Transaktion, welche mit dem ersten und dem zweiten Schlüssel doppelt verschlüsselt werden, wobei die Verschlüsselung mit dem Schlüssel, der zu der unverschlüsselten Codezahl gehört, zuletzt erfolgt,

wobei ein Zugriff zum ersten und zweiten Schlüssel, als solcher, durch die Untereinheit vom Terminal und durch das Terminal von der Untereinheit nicht möglich ist.

2. Datenübertragungseinrichtung nach Anspruch 1, in der die genannte, zumindest eine der Codezahlen, die erste Codezahl (Geschäftsnummer des Händlers) ist, und die zweite Codezahl (Persönliche Kartennummer) in der Übertragungsnachricht mit dem ersten Schlüssel (K$_R$) verschlüsselt wird.

3. Datenübertragungseinrichtung nach den Ansprüchen 1 oder 2, mit einem Zentralsystem zum Datenaustausch mit dem Terminal, wobei das Zentralsystem einen eigenen Speicher für die Schlüssel, den ersten und den zweiten Schlüssel miteinbegriffen, aufweist und ein Zugriff zu jedem Schlüssel unter Verwendung der entsprechenden Codezahl (Geschäftsnummer des Händlers oder persönliche Kartennummer) für diesen Schlüssel erfolgen kann.

4. Datenübertragungseinrichtung nach Anspruch 3, in der das Zentralsystem Mittel aufweist zum automatischen Vergleich, nach der Entschlüsselung der übertragenen Nachricht, der Daten (TM1 und TM2) der Transaktion zur Feststellung der Identität, und zur Durchführung gemäß der Übertragungsnachrichten, wenn die identität festgestellt wird.

5. Datenübertragungseinrichtung nach Anspruch 4, welche ein elektronisches Geldüberweisungssystem darstellt, worin das Zentralsystem Geldmittel zwischen Konten, welche in der Übertragungsnachricht angegeben sind, transferiert, wenn Identität festgestellt wird.

6. Datenübertragungseinrichtung nach einem der vorhergehenden Ansprüche, in der die Übertragungsnachricht Tageszeitdaten enthält.

7. Datenübertragungseinrichtung nach einem der vorhergehenden Ansprüche, in der die Dateneingabemittel ein Tastenfeld (24) im Terminal und ein Tastenfeld (14) in der Untereinheit aufweisen.

8. Datenübertragungseinrichtung nach einem der vorhergehenden Ansprüche, in der das Terminal eine Anzeigeeinheit (20) enthält und die Untereinheit eine Anzeigeeinheit (10) aufweist, wobei beide Anzeigeeinheiten Daten (TM1 oder TM2) einer Transaktion darstellen können.

9. Datenübertragungseinrichtung nach einem der vorhergehenden Ansprüche, in der die erste und die zweite Verschlüsselungseinheit (28, 11) Blockschlüssel-Verschlüsselungseinheiten sind.

10. Datenübertragungseinrichtung nach einem der vorhergehenden Ansprüche, in der die Untereinheit eine Datenspeicher- und Übertragungskarte (DSTC) aufweist, welche Speichermittel zur Speicherung zumindest eines Teiles des zweiten Schlüssels ($K_p$) aufweist.

## Revendications

1. Appareil de communication comportant un terminal (POST) ayant une première unité de chiffrement (28) avec une première clé ($K_R$), un sous-ensemble (XATR, DSTC) ayant une seconde unité de chiffrement (11) avec une seconde clé ($K_p$), des moyens (interface XATR/POST) pour coupler sélectivement ledit terminal et ledit sous-ensemble afin d'échanger des données, au moins l'un desdits terminal et sous-ensemble ayant des moyens d'entrée de données (24, 14), caractérisé par des moyens de commutation (S1 à S8) pouvant sélectivement établir des trajets de données dans et entre le terminal et ledit sous-ensemble afin qu'il y ait formation d'un message de transmission à partir des données de message dont au moins quelques unes des données variables sont entrées auxdits moyens d'entrée de données, à la sortie du terminal comprenant:

a) un premier numéro de code (numéro de Maison de Commerce du Détaillant) et un second numéro de code (numéro de Carte de la Personne) identifiant respectivement la première clé ($K_R$) et la seconde clé ($K_p$), au moins l'un desdits numéros de code étant non chiffré par l'une ou l'autre des deux clés,

b) des données (TM1) d'une transaction chiffrée selon la clé correspondant à cedit numéro de code non chiffré,

c) des données (TM2) de ladite transaction doublement chiffrée selon les première et seconde clés, le chiffrement selon la clé correspondant à cedit numéro de code non chiffré, étant le dernier,

les première et seconde clés, telles qu'elles, n'étant pas respectivement accessibles à partir du terminal par ledit sous-ensemble et par ledit terminal à partir du sous-ensemble.

2. Appareil de communication selon la revendication 1, dans lequel cedit numéro de code est ledit premier numéro de code (numéro de Maison de Commerce du Détaillant), le second numéro de code (numéro de Carte de la Personne), dans le message de transmission, étant chiffré selon la première clé ($K_R$).

3. Appareil de communication selon la revendication 1 ou 2, comprenant un récepteur hôte couplé pour un échange de données avec ladite sortie de terminal, ledit recepteur hôte ayant sa propre mémoire de clés comprenant les première et seconde clés, chaque clé pouvant être accessible en utilisant le numéro de code respectif (numéro de Maison de Commerce du Détaillant ou le numéro de Carte de la Personne) pour cette clé.

4. Appareil de communication selon la revendication 3, dans lequel ledit recepteur hôte comprend des moyens pour comparer automatiquement, après déchiffrement du message de transmission, les données (TM1 et TM2) de la transaction en vue de l'identité, et pour agir conformément au message de transmission lorsque est trouvée ladite identité.

5. Appareil de communication selon la revendication 4 qui forme un système de transfert de fonds électronique, l'hôte transférant les fonds entre les comptes indiqués par le message de transmission lorsque ladite identité est trouvée.

6. Appareil de communication selon l'une quelconque des revendications précédentes, dans lequel le message de transmission comprend des données relatives à l'heure du jour.

7. Appareil de communication selon l'une quelconque des revendications précédentes, dans lequel lesdits moyens d'entrée de données comprennent un clavier (24) dans le terminal, et un clavier (14) dans le sous-ensemble.

8. Appareil de communication selon l'une quelconque des revendications précédentes, dans lequel le terminal comprend un affichage (20), et le sous-ensemble comprend un affichage (10), les deux affichages pouvant afficher les données (TM1 ou TM2) d'une transaction.

9. Appareil de communication selon l'une quelconque des revendications précédentes, dans lequel lesdites première et seconde unités de chiffrement (28, 11) sont des unités de chiffrement par blocs de chiffres.

10. Appareil de communication selon l'une quelconque des revendications précédentes, dans lequel ledit sous-ensemble comprend une mémoire de données et une carte de transfert (DSTC) contenant des moyens d'emmagasinage emmagasinant au moins en partie ladite seconde clé ($K_p$).

# FIG.1

P
PERSON

R
RETAILER

COMM.
LINK

H
HOST
SYSTEM

DSTC
DATA STORAGE
& TRANSFER
CARD

TRANSACTION
STORAGE

XATR
TRANSACTOR

POST
POINT OF
SALE
TERMINAL

LOCAL
HOST

MACHINE
OR
NETWORK
OF
MACHINES

0032193

FIG. 2

TO HOST

CONTINUE

S5

S7

E 28

S6

COMP 34

REG. 32

CLOCK 30

KYBD 24

26

XATR / POST INTERFACE

S8

R E G. 22

D I S P L A Y 20

R's POST

LOOP TM

E 11

S3

D I S P L A Y 10

S4

REG. 12

S2

R E G.

16

KYBD 14

S1

P's DSTC / XATR

# FIG. 3

FIG. 3

# FIG. 4

XATR/POST INTERFACE

P's DSTC/XATR

R's POST

0032193

# FIG. 5A  STEP 1: MESSAGE RECEIVED AT HOST

BOTH ARE LOOP TM AND MUST BE IDENTICAL AT HOST

PERSON'S KEY ACCESSIBLE FROM:

RETAILER'S KEY ACCESSIBLE FROM:

TM2

TM1

| TRANS. MES. COMMON DATA (FROM P) | PERSON'S DATA = | PERSON'S (DSTC)CARD NUMBER | TRANS. MES. COMMON DATA (FROM R) | RETAILER'S DATA | RETAILER'S BUSINESS NUMBER |

←DOUBLY ENCRYPTED→ ←SINGLY ENCRYPTED→ ←CLEAR→

# FIG. 5B  STEP 2: HOST OBTAINS K_R USING RETAILER'S BUSINESS NUM. AND DECRYPTS TM1

| TRANS. MES. COMMON DATA | PERSON'S DATA | PERSON'S (DSTC)CARD NUMBER | TRANS. MES. COMMON DATA | RETAILER'S DATA | RETAILER'S BUSINESS NUMBER |

←(NOW SINGLY ENCRYPTED)→ ←(NOW CLEAR)→ ←CLEAR→

←DECRYPTED UNDER $K_R$→

# FIG. 5C  STEP 3: HOST OBTAINS Kp USING PERSON'S CARD NUM. AND DECRYPTS TM2

| TRANS. MES. COMMON DATA | PERSON'S DATA | PERSON'S (DSTC)CARD NUMBER | TRANS. MES. COMMON DATA | RETAILER'S DATA | RETAILER'S BUSINESS NUMBER |

←DECRYPTED UNDER Kp→ ←CLEAR→ ←CLEAR→
(NOW CLEAR)